# EUROPÄISCHE PATENTSCHRIFT

(11) **EP 3 499 013 B1**
(45) Veröffentlichungstag und Bekanntmachung des Hinweises auf die Patenterteilung: **01.12.2021**
(21) Anmeldenummer: 18202234.3
(22) Anmeldetag: 24.10.2018
(51) Int. Cl.: F02K 9/88, F42B 10/66

(54) **UM EINE ACHSE DREHBARER VENTILKÖRPER FÜR EIN REGELBARES QUERSCHUBTRIEBWERK**
VALVE BODY FOR AN ADJUSTABLE THRUST ENGINE WHICH CAN BE ROTATED AROUND AN AXIS
CORPS DE SOUPAPE ROTATIF AUTOUR D'UN AXE POUR UN MOTEUR À POUSSÉE TRANSVERSALE RÉGLABLE

(30) Priorität: 15.12.2017 DE 102017130117
(43) Veröffentlichungstag der Anmeldung: 19.06.2019
(73) Patentinhaber: Bayern-Chemie Gesellschaft für flugchemische Antriebe mbH, 84544 Aschau am Inn (DE)
(72) Erfinder: Bauer, Karl, 83564 Soyen (DE); Kurth, Guido, Dr., 83512 Wasserburg am Inn (DE)
(74) Vertreter: LS-MP von Puttkamer Berngruber Loth Spuhler

(56) Entgegenhaltungen:
- JP-A- 2013 174 330
- US-A1- 2003 217 547
- US-A1- 2012 181 372

## Beschreibung

Die Erfindung bezieht sich auf ein Ventil für ein regelbares Querschubtriebwerk für Flugkörper nach dem Oberbegriff des Anspruchs 1 sowie auf ein ein solches Ventil aufweisendes Querschubtriebwerk nach dem Oberbegriff des Anspruchs 13 sowie auf einen Flugkörper mit einem ein entsprechendes Ventil aufweisenden Querschubtriebwerk nach dem Oberbegriff des Anspruchs 14.

### Stand der Technik:

Die Düse eines Schub-Triebwerks einer Rakete oder eines Flugkörpers dient u.a. der Ausnutzung des Treibstoffs. Die Düse beschleunigt die bei der Verbrennung des Treibstoffs entstehenden Gase bei ihrem Austritt aus der Brennkammer.

Die Austrittsgeschwindigkeit bezeichnet die Geschwindigkeit der Gase, wenn sie die Düsenmündung erreichen. Ein Parameter für die Austrittsgeschwindigkeit ist die räumlich-geometrische Ausgestaltung der Düse und hier insbesondere das Flächenverhältnis von Düsenhals zu Düsenmündung.

Ebenso wie Schubtriebwerke weisen auch Querschubtriebwerke Düsen auf, die mittels Verbrennungsgasen, die bei der Verbrennung von Treibstoff in der Brennkammer entstehen, betrieben werden.

Düsen solcher Querschubtriebwerke, die nachfolgend Querschubdüsen genannt werden, sind darauf gerichtet, einen Schub abweichend von der Längsachse des zu steuernden Flugkörpers zu bewirken; in der Regel ist der Schub senkrecht zur Längsachse des zu steuernden Flugkörpers gerichtet.

Dadurch können Querschubtriebwerke insbesondere für Änderungen der Lagesteuerung und/oder der Bahnsteuerung des Flugkörpers eingesetzt werden. Durch derartige Querschubtriebwerke, die insbesondere in der Startphase und in der Endanflugsphase (end game) ihres Flugkörpers initiiert werden, verbessern die Manövrierfähigkeit des Flugkörpers wesentlich.

Die Ventile können Kaltgas-Ventile sein, sind aber häufig Heißgas-Ventile. Der Ventilkörper wird dabei von den heißen Verbrennungsgasen umströmt. Durch die Regelung bzw. Steuerung wird Einfluss auf eine in Wirkverbindung mit der jeweiligen Querschubdüse stehende Ansteuereinheit genommen, die die Änderung der Lagesteuerung bzw. der Bahnsteuerung des Flugkörpers ausführt. Die Ansteuereinheit kann Stehruder oder vergleichbare Bauteile umfassen, die zur Richtungsänderung des Flugkörpers beitragen.

Solche Querschubtriebwerke sind bekannt und etwa in der deutschen Patentanmeldung DE 10 2016 101 560 A1 der Anmelderin beschrieben. Die Anmelderin macht die Offenbarung in der DE 10 2016 101 560 A1 auch zum Gegenstand der vorliegenden Offenbarung.

In der DE 197 35 279 C1 ist ein drehbar angeordneter Ventilkörper beschrieben, der der Ventilkörper als scheibenförmiger Keil ausgebildet ist, der die Düsenöffnung mehr oder weniger verschließt. Bei dieser Ausführung strömen die Gase oft einseitig durch die Düse und der Strömungsvektor wird dabei erheblich abgelenkt, was zu großen Problemen bei der Steuerung führt.

Aus der japanischen Patentanmeldung JP 2013-174330 ist ein Ventil für einen Dampffluss in einer Dampfturbine beschrieben, dessen Ventil als Rückschlagventil ausgestaltet ist.

Die US-amerikanische Patentanmeldung US 2003/0217547 A1 beschreibt ein Seitenstrahlventil eines Luft- und Raumfahrzeugs mit dem Ziel, das Drehmoment eines Servomotors für das Öffnen und Schließen der Düsen zu reduzieren, um dadurch ein kompaktes und leichtes Gerät zu realisieren. Dazu wird ein Ventilkolben vorgesehen, dessen Rückseite auf eine Achse des Luft- und Raumfahrtzeugs gerichtet ist, die unabhängig zwischen einer vollständig geöffneten und einer vollständig geschlossenen Position in einer Ebene oktogonal zur Achse des Luft- und Raumfahrtzeugs liegend verläuft. Der Ventilkolben umfasst ein Betätigungsmittel zu seiner Bewegung in axialer Richtung.

Die US Anmeldung US 2012/0181372 A1 beschreibt eine Betätigungseinheit, die eine Vielzahl von Linearantrieben umfasst, wobei jeder der Linearaktuatoren mit ersten und zweiten Komponenten so konfiguriert ist, dass die zweite Komponente einer Achse konfiguriert ist.

Regelbare Querschubtriebwerke besitzen meist mehrere Düsen, die oft radial, innerhalb der Außenbegrenzung des Flugkörpers oder der Rakete angeordnet sind. Je ein beweglicher Ventilkörper für jede Düse, der die Düsenöffnung mehr oder weniger verschließt, erzeugt einen veränderlichen Schub, der für die Steuerung der Rakete oder des Flugkörpers verwendet wird. Der Bauraum für die einzelnen Düsen und Ventilkörper einschließlich der Ansteuereinheit ist meist sehr begrenzt, da für die äußere Begrenzung der Querschubtriebwerke oft der Außendurchmesser des Flugkörpers oder der Rakete vorgegeben ist und die Querschubtriebwerke häufig in einer Ebene angeordnet werden.

### Technische Problemstellung:

Ausgehend von diesen Nachteilen des Standes der Technik ist es deshalb eine Aufgabe der Erfindung, ein Ventil bzw. eine Anordnung von Ventilen für ein Querschubtriebwerk so zu gestalten, dass das Querschubtriebwerk einen möglichst geringen Durchmesser und Bauraum einnimmt.

Ein weiteres technisches Problem besteht darin, Ventile mit Ventilkörpern so auszugestalten, dass die Gasströmung den Ventilkörper möglichst konzentrisch umströmt und der Strömungsvektor der Gasströmung nicht oder nur gering abgelenkt wird.

Ferner soll die Ansteuereinheit der Querschubtriebwerke bei der Erzeugung und der Ausführung der Änderungen an der Lagesteuerung bzw. Bahnsteuerung des Flugkörpers dauerhaft funktionsfähig erhalten bleiben.

Ein damit im Zusammenhang stehendes technisches Problem ist es, für eine dauerhafte und exakte Einhaltung der durch die Querschubdüsen initiierten Änderungen der Lagesteuerung bzw. Bahnsteuerung des Flugkörpers Sorge zu tragen.

Zudem ist angestrebt, die Ansteuerkräfte uneingeschränkt auf die Ansteuereinheit übertragen zu können.

Des Weiteren soll eine kostengünstige, einfache sowie leicht herstellbare Ausgestaltung der Querschubdüsen, ihrer Ventile sowie der die Querschubdüsen enthaltenen Querschubtriebwerke insoweit geschaffen werden.

### Beschreibung der Erfindung:

Die Erfindung bezieht sich auf ein Ventil für ein regelbares Querschubtriebwerk für Flugkörper nach Anspruch 1 sowie auf ein ein solches Ventil aufweisendes Querschubtriebwerk nach des Anspruch 13 sowie auf einen Flugkörper mit einem ein entsprechendes Ventil aufweisenden Querschubtriebwerk nach Anspruch 14.

### Bevorzugte

Ausgestaltungen sind in den Unteransprüchen beschrieben.

Unter dem Begriff Flugkörper im Sinne der vorliegenden Offenbarung werden alle flugfähigen Objekte verstanden, also insbesondere Raketen, Raumschiffe, Sonden, Flugzeuge, Satelliten, gleichgültig, ob sie etwa bodengestützt, luftgestützt, personengestützt, fahrzeuggestützt oder wassergestützt sind.

Regelbare Querschubtriebwerke besitzen meist mehrere Düsen, die oft radial und insbesondere kartesisch im oder um den Flugkörper angeordnet sind.

Für die vorliegende Offenbarung soll beispielhaft von einer Düsenanordnung mit vier radial innerhalb der Außenbegrenzung des Flugkörpers angeordneten Düsen ausgegangen werden. Die Anzahl der Düsen kann aber auch eine andere sein; insbesondere ist es nicht zwingend, dass eine kartesische Anordnung der Düsen gewählt wird. Regel- oder Steueralgorithmen bewirken die Regelung bzw. Steuerung von Aktuatoren, der Düsen bzw. der mit den Düsen in Wirkverbindung stehenden Ventile.

Unter Regelbarkeit im Sinne der vorliegenden Erfindung wird auch die Steuerbarkeit verstanden; entsprechend wird unter Regelung auch die Steuerung verstanden.

Die Erfindung basiert auf dem nachfolgend zusammengefassten Ausgangspunkt und auf der Analyse der durch die Betätigung der Querschubdüsen in Gang gesetzten Zustände und Abläufe überaus komplexer, vor allem aber u.a. extrem kurzer Vorgänge bei immensen Temperaturen:
Die regelbaren Querschubtriebwerke werden mit heißen Gasen, die aufgrund der Verbrennung des Treibstoffs in der Brennkammer des Flugkörpers entstehen, betrieben, da diese einen höheren Wirkungsgrad haben als kalte Gase.

Nachfolgend wird die Erfindung anhand eines Querschubtriebwerks bzw. anhand einer Querschubdüse beschrieben; diese Beschreibung gilt für sämtliche der in einem erfindungsgemäßen Flugkörper verwendeten Querschubtriebwerke bzw. Querschubdüsen.

Die regelbare Querschubdüse enthält eine Anordnung wenigstens eines Ventils. Das Ventil weist einen Ventilkörper auf.

Der Ventilkörper ist im Inneren des Gehäuses der Querschubdüse angeordnet.

Das Ventil dient der Steuerung des jeweiligen Gasstroms. Das Ventil ist vorzugsweise als Heißgasventil ausgestaltet. Es kann über jede geeignete Art gesteuert werden, z.B. über elektromagnetisch betätigbare Bauteile.

In der beispielhaft in Bezug genommenen Ausführungsform eines Querschubtriebwerks mit vier Düsen sind diese in einer Ebene, radial im rechten Winkel angeordnet, wobei sich die Gaszuführung in der Mitte der Anordnung der vier Düsen befindet, die Düsen also von dem Ende des Gaszuführung, der von der Brennkammer kommt, kreuzförmig ausgehen.

Der Ventilkörper ist beweglich. Dabei kann der Ventilkörper bevorzugt in beide Richtungen entlang seiner Längsachse bewegt werden. Durch diese bewegliche Ausgestaltung des Ventilkörpers können die Durchflussmenge und die Strömungsgeschwindigkeit der Verbrennungsgase, die den Ventilkörper umströmen, gesteuert werden.

Jeder Ventilkörper kann durch die bevorzugt zentrale Zuströmung von Gas bevorzugt einzeln angesteuert werden.

Besonders bevorzugt ist es, wenn der Ventilkörper weitgehend als Rotationskörper ausgebildet ist. Durch die rotationsförmige Kontur des Ventilkörpers und der bevorzugt ringförmigen Düse lassen sich eine besonders gleichmäßige, konzentrische Umströmung des Ventilkörpers und somit ein zur Düsenachse ausgerichteter Strömungsvektor erzielen.

Wird der Ventilkörper in Richtung der Ableitung der Gasströmung aus der Querschubdüse bewegt, so nähert sich der Ventilkörper des Ventils mit seinem bevorzugt kegelförmigen, z.B. spitzkegelförmigen, mithin sich konisch verjüngendem Komplementärabschnitt, auch Kopfbereich genannt, dem konvexen Verlauf der Innenwandung der Querschubdüse im Bereich deren Düsenhalses. Hierdurch ändert sich der Querschnitt des Kanals für die Durchleitung der Verbrennungsgase, wobei der Kanal zwischen dem Kopfabschnitt des Ventilkörpers und dem Düsenhals der Düse angeordnet ist. Mithin wird der Strömungsquerschnitt zwischen der Düse, genauer: zwischen dem Düsenhals der Düse, und dem Ventilkörper durch den beweglichen Ventilkörper verändert.

Die Querschnittsänderung des Kanals kann von einer vollständigen Schließung des Düsenhalses durch den kegelförmigen Komplementärabschnitt bzw. Kopfabschnitt des Ventilkörpers bis zu einer vollständigen Öffnung des Düsenhalses führen. Je nach Offen- oder Geschlossen-Zustand des Strömungsquerschnittskanals ändert sich die Umströmung des Ventilkörpers mittels der Verbrennungsgase.

Da, wie dargelegt, jeder Ventilkörper durch die Zentrale zu Strömung von Gas bevorzugt einzeln angesteuert werden kann, bedeutet dies, dass die vorbeschriebenen Düsenquerschnitte durch die jeweiligen Ventilkörper in unterschiedlicher Weise verschlossen, verengt oder geöffnet sein können. Hierdurch wird eine flexible, abrupte Lenkbewegungen vermeidende Änderung der Lage-oder Bahnsteuerung des Triebwerks ermöglicht.

Bevorzugt ist der Ventilkörper des Ventils als sog. Pintle-Konfiguration, auch als Zapfen-Konfiguration bezeichnet, ausgestaltet, bei der die Pintle bzw. der Zapfen den Düsenhals der Querschubdüse schließen oder öffnen kann.

Andere Düsenarten und Ventil-Konfigurationen kommen aber ebenfalls in Betracht, z.B. in der Ausgestaltung als Sitzlochdüsen, Sacklochdüsen.

Wie bereits erwähnt, ist der Ventilkörper in den Ventilen der Querschubdüse so ausgestaltet, dass er sich in beide Richtungen entlang seiner Längsachse bewegen lässt. Dies wird mittels eines Hebels bewirkt, was nachfolgend näher beschrieben wird.

Zu diesem Zweck ist bevorzugt jeder der Ventilkörper an seinem dem Kopfbereich gegenüberliegenden Ende mit einem Hebel verbunden. Die Verbindung mit dem Hebel ist bevorzugt formschlüssig. Die Verbindung kann darüber hinaus auch kraftschlüssig und oder reibschlüssig sein.

Der Hebel kann jegliche geeignete geometrische Form aufweisen. Der Hebel ist in einem Aufnahmeraum der Düsenanordnung angeordnet.

Er erstreckt sich bevorzugt in einem etwa rechten Winkel von dem Ende des Ventilkörpers in den Aufnahmeraum der Düsenanordnung hinein.

Die Verbindung zwischen dem Ventilkörper und dem Hebel ist dabei bevorzugt räumlich in der Nähe des Eintritts des von der Brennkammer kommenden Gaszuführkanal angeordnet.

Die Geometrien des Endbereichs des Ventilkörpers und des Verbindungsbereiches des Hebels sind auf einander abgestimmt, wobei jeweils auch inverse Geometrien möglich sind.

Dieser Endbereich des Ventilkörpers ist vorzugsweise als Verbindungsanschluss ausgestaltet. Verbindungsanschluss bedeutet hierbei eine Ausgestaltung, an die sich ein anderes Bauteil, wie die Ansteuereinheit, anschließt. Der Endbereich des Ventilkörpers bzw. der Verbindungsanschluss dient der Verbindung des Ventilkörpers mit dem Hebel.

An seinem in Richtung Verbindungsbereich des Hebels angeordneten Endbereich, d.h. an seinem gegenüber dem vorerwähnten Kopfbereich gegenüber liegenden Bereich, kann der Ventilkörper vorzugsweise kleiner, z.B. schmaler, dünner, ausgestaltet sein als in seinem übrigen Teil.

Dieser Bereich kann insbesondere zylinderförmig, aber auch flach, oder mehrkantig ausgestaltet sein und in eine entsprechende Gegenform des Verbindungsbereichs des Hebels aufgenommen werden. Die Gegenform ist bevorzugt passgenau.

Der Endbereich des Ventilkörpers kann also zum Beispiel als Bolzen, als Stiftverbindung oder dergleichen ausgestaltet sein und in eine entsprechende Öffnung des Verbindungsbereichs des Hebels gesteckt werden. Im Falle eines zylinderförmigen Bolzens ist der Aufnahmeraum des Verbindungsbereichs des Hebels entsprechend zylinderförmig ausgestaltet. Bei einer mehrkantigen Ausgestaltung des Endbereichs des Ventilkörpers weist der Verbindungsbereich des Hebels eine entsprechende mehrkantige Geometrie auf.

Ist der Endbereich des Ventilkörpers etwa als federförmiges Teil ausgestaltet, so greift dieses Teil in eine entsprechende nutförmige Ausnehmung des Verbindungsbereichs des Hebels ein. Die nutförmige Ausnehmung kann den Endbereich des Ventilkörpers zumindest teilweise umgreifen.

Insoweit kommen alle geeigneten Verbindungstechniken in Betracht unter Beachtung üblicher Maßnahmen für die Einhaltung von Passungen, Toleranzen, Festigkeiten und dergleichen.

Beabstandet von dem Verbindungsbereich des Hebels ist dessen Drehachse angeordnet. Somit ist der Ventilkörper mit dem um die Drehachse drehbaren Hebel bevorzugt formschlüssig verbunden.

Der Hebel ist bevorzugt über eine drehbare Welle mit einem Stellantrieb verbunden. Er kann über diesen Stellantrieb durch Drehen einer Welle um die Drehachse bewegt werden. Der Stellantrieb kann die Welle elektrisch oder hydraulisch um die Drehachse drehen.

Die Achse der Welle und die Drehachse des Hebels können räumlich-geometrisch und/oder funktional zusammenfallen, aber auch getrennt sein. Fallen sie zusammen, ist die Achse der Welle gleichzeitig die eigentliche Drehachse des Hebels, d. h. die Drehung der Welle führt simultan zur Bewegung des Hebels um seine Drehachse am selben Ort. Wenn sie nicht zusammenfallen, entspricht die Achse der Welle nicht gleichzeitig der eigentlichen Drehachse des Hebels, d. h. die Drehung der Welle führt zur Bewegung des Hebels um seine Drehachse an anderem Ort.

Die Welle ist bevorzugt an dem gegenüberliegenden Ende des Verbindungsbereichs des Hebels mit dem Hebel verbunden. Dieser, die Welle aufnehmende Bereich des Hebels ist in einem Bereich des Gehäuses der Düsenanordnung untergebracht, der von dem Bereich der Verbindung des Endes des Ventilkörpers mit dem Verbindungsbereich des Hebels räumlich entfernt ist, nämlich bevorzugt diesem gegenüberliegt.

Die Achse der Welle kann mithin die Drehachse des Hebels bilden. Die Achs der Welle kann aber auch in einem gewissen Abstand zur Drehachse des Hebels angeordnet sein, etwa dergestalt, dass die Achse der Welle am vorerwähnten gegenüberliegenden Ende des Verbindungsbereichs des Hebels angeordnet ist, während die eigentliche Drehachse des Hebels räumlich getrennt verläuft, etwa in der räumlich-geometrischen Mittenlage des Hebels. Die technische Umsetzung von Drehung der Welle und Drehung des Hebels um seine Drehachse kann mithin zusammenfallen, aber auch separiert erfolgen.

In bevorzugter Weise ist eine Nocke auf der Welle angeordnet, die im Betrieb des Stellantriebs, der die Drehung der Welle bewirkt, zur Bewegung des Hebels entsprechend der Nockenform führt. Die Nocke ist bevorzugt exzentrisch geformt. Der Hebel ist dabei bevorzugt kraftschlüssig mit der exzentrischen Nocke verbunden.

Die Welle wie auch der Hebel sind bevorzugt in einem die Düsenanordnung aufnehmenden Gehäuse untergebracht.

Wenn die technische Umsetzung von Drehung der Welle und Drehung des Hebels um seine Drehachse separiert erfolgt, kann eine oder können mehrere ebenfalls in diesem Gehäuse, bevorzugt an der gegenüberliegenden Seite der Welle, angeordnete Feder(n)vorgesehen sein. Die Feder(n) stützt/ stützen sich bevorzugt an der Außenseite des Hebels und bevorzugt an der Innen-Wandung des Gehäuses der Düsenanordnung ab. Die Feder(n) führt/führen zur Reduzierung der durch die Betätigung des Stellantriebs einhergehenden Bewegung der Welle um die Drehachse des Hebels und damit zur Entlastung des Stellantriebs. Die wenigstens eine Feder ist bevorzugt kraftschlüssig mit dem Hebel verbunden.

Die mit der Drehung der Welle einhergehende Bewegung bzw. die mit der Drehung der Welle einhergehende Nockenbewegung führt entweder zu einer direkten Drehung des Hebels um seine Drehachse, wenn die Achse der Welle die Drehachse des Hebels im Sinne der vorerwähnten Ausführungen bildet, oder zu einer entsprechenden lateralen Bewegung des die Welle aufnehmenden Teils des Hebels vorwärts und rückwärts, wenn die Achse der Welle am vorerwähnten gegenüberliegenden Ende des Verbindungsbereichs des Hebels angeordnet ist, während die eigentliche Drehachse des Hebels räumlich getrennt verläuft im Sinne der vorerwähnten Erläuterung. In beiden Fällen jedoch führt dies zu einer entsprechenden Drehbewegung des Hebels um seine Drehachse. Da der Ventilkörper, wie dargelegt, im Verbindungsbereich des Hebels mit diesem verbunden ist, führt die Drehung des Hebels um seine Drehachse zu einer entsprechenden Bewegung des Ventilkörpers entlang seiner Längsachse.

Durch die Bewegung des Ventilkörpers wird wiederum die Düsenöffnung verkleinert oder vergrößert, um den Schub zu verändern.

Durch diese vorbeschriebene Ausgestaltung können in einer Ebene mehrere gegenüberliegende Düsen auf kleinstem Raum angeordnet werden und durch eine zentrale zu Strömung mit Gas versorgt werden, wobei in bevorzugter Weise jeder Ventilkörper einzelnen angesteuert werden kann. Das Querschubtriebwerk nimmt mithin einen möglichst geringen Durchmesser und Bauraum ein, die Gasströmung umströmt den Ventilkörper konzentrisch und der Strömungsvektor der Gasströmung wird nicht oder allenfalls gering abgelenkt.

In einer bevorzugten Ausführungsform ist die eine Feder oder sind mehrere Federn mit dem Hebel kraftschlüssig verbunden. Diese Feder könnte(n) so angeordnet sein, dass die Kraft, die auf die Feder(n) wirkt, entgegengesetzt der Kraft ist, die durch den Gasdruck über den Ventilkörper auf den Hebel lastet, wodurch die Kraft und die Leistung des Stellantriebs verringert werden.

In einer bevorzugten Ausführungsform weist wenigstens ein Bereich der Oberfläche des Hebels eine Isolationsschicht auf, die den Hebel vor übermäßig starke Erwärmung schützt, damit die Festigkeit des Hebels durch Wärmeeinwirkung nicht stark abfällt. Insoweit gelten die nachfolgenden Ausführungen zu der stofflichen Ausgestaltung des Ventilkörpers mit einem hitzebeständigen Material gleichermaßen für die stoffliche Ausgestaltung der Isolationsschicht des Hebels.

In einer weiteren bevorzugten Ausführungsform sind der Ventilkörper und der Hebel als eine untrennbare Einheit ausgebildet. Sie können in diesem Fall insbesondere materialeinheitlich und/oder in einem ausgestaltet sein, um das System zu vereinfachen und um Anwendungsprobleme zwischen Ventilkörper und Hebel noch weiter zu verringern.

Der Ventilkörper des Ventils der Querschubdüse kann weiterhin mit der Ansteuereinheit des Querschubtriebwerks verbunden sein.

Durch die Bewegung des Ventilkörpers in seiner Längsachse bewegt sich auch die Ansteuereinheit, die damit auch einen Aktuator entsprechend bewegt, wodurch die Änderung in der Lagesteuerung bzw. Bahnsteuerung bewirkt wird.

Ungeachtet der konstruktiven Ausgestaltung der Düsenart oder des Ventils und seines Ventilkörpers wird letzterer bei Initiierung und Ausführung von Änderungen an der Lagesteuerung bzw. Bahnsteuerung von den heißen Verbrennungsgasen umströmt und erhitzt sich dadurch stark.

Aus diesem Grund ist es ein bekannter Aspekt, dass zunächst der Werkstoff des Ventilkörpers des Ventils hitzebeständig ist bzw. aus einem hitzebeständigen Werkstoff aufgebaut ist.

Hitzebeständige Materialien sind etwa hitzebeständige Metalle, wie z.B. Wolfram, Molybdän oder Titan-Zirkon-Molybdän. Bei letzterem liegt eine hohe Warmfestigkeit bis etwa 1400°C bei geringer thermischer Ausdehnung vor, was allgemein zu seinem bevorzugten Einsatz in Heißkanal-Düsen führt.

Zu den physikalischen Eigenschaften dieser metallischen Werkstoffe gehört jedoch u.a. eine hohe Wärmeleitfähigkeit. Diese wird je nach Literaturquellen oder Datenblättern von Lieferanten oder Herstellern für die soeben beispielhaft genannten metallischen Werkstoffe mit etwa W/(m × K)=140 (20⁰C) oder W/(m × K) =ca. 130(20°C) für Titan-Zirkon-Molybdän und W/(m x K)=138(20°C) für Molybdän angegeben.

Diese gute Wärmeleitfähigkeit metallischer Werkstoffe führt dazu, dass sich auch an das Ventil bzw. an den Ventilkörper angrenzende Bauteile, wie etwa der vorerwähnte Hebel, insbesondere bei längerem Betrieb der Düse ebenfalls erhitzen und häufig überhitzen. Ein übermäßiges Erhitzen dieser Bauteile erschwert oder verunmöglicht eine dauerhafte und exakte Einhaltung der durch die Querschubdüsen initiierten Änderungen der Lagesteuerung bzw. Bahnsteuerung des Flugkörpers, insbesondere wenn diese, wie üblich, aus einem weniger hitzebeständigen Werkstoff besteht.

Es ist deshalb ein wesentlicher Aspekt der Erfindung, insbesondere den Ventilkörper des Ventils der Querschubdüse so auszugestalten, dass er nicht nur über eine ausreichende Hitzebeständigkeit, sondern auch direkt oder indirekt über eine solche im Vergleich zu metallischen Werkstoffen reduzierte Wärmeleitfähigkeit verfügt, die eine Weiterleitung der Wärme bzw. Hitze an angrenzende Bauteile, wie den Hebel, in ausreichendem Maße verhindert.

Zu diesem Zweck schlägt die Erfindung ergänzend vor, den Ventilkörper des Ventils der Querschubdüse bevorzugt so auszugestalten, dass er über eine ausreichende Hitzebeständigkeit sowie über eine im Vergleich zu metallischen Werkstoffen reduzierte Wärmeleitfähigkeit verfügt, die eine Weiterleitung der Wärme bzw. Hitze an angrenzende Bauteile, wie den Hebel, in ausreichendem Maße verhindert.

Erfindungsgemäß ist ein die Wärme schlecht leitender Körper aus einem anorganischen und überwiegend nicht metallischen Werkstoff vorgesehen. Dieser nachfolgend vereinfachend als keramischer Werkstoff bezeichnete Werkstoff kann den Ventilkörper selbst betreffen oder ein im Vergleich zum eigentlichen Ventilkörper unabhängiges Bauteil betreffen. Durch diesen keramischen Werkstoff wird eine übermäßige Übertragung der Hitze von dem Ventilkörper auf ein an dem Ventilkörper angrenzendes Bauteil, wie die Ansteuereinheit, reduziert oder gar weitgehend bzw. vollständig ausgeschlossen.

Zu den anorganischen und überwiegend nicht metallischen Werkstoffen, die erfindungsgemäß je nach Ausgestaltung der Querschubdüse und Anforderungen, die an sie gestellt werden können, verwendet werden, gehören vor allem keramische Werkstoffe, aber auch anorganisches Glas oder Zement als anorganisches Bindemittel, das mit weiteren anorganischen Stoffen für die Herstellung von Beton verwendet wird. Bevorzugt im Sinne der Erfindung sind die keramischen Werkstoffe. Denn Glas, das an sich kostengünstiger in der Herstellung ist, hat - je nach seiner Ausgestaltung - gegenüber einem keramischen Werkstoff in der Regel eine niedrigere Schmelztemperatur.

Geeignete keramische Werkstoffe sind keramische Faserwerkstoffe, nicht-oxidische keramische Werkstoffe oder oxidische keramische Werkstoffe.

Besonders geeignet ist Silikatkeramik. Zu den Werkstoffen der Silikatkeramik gehören Porzellan, Steatit, Cordierit und Mullit. Wegen relativ geringer Sintertemperaturen, guter Verfügbarkeit der zugrunde liegenden Rohstoffe, einfacher Prozessabläufe ist Silikatkeramik verhältnismäßig günstig. Silikatkeramik verfügt über eine hohe mechanische Festigkeit, gutes Isoliervermögen und hervorragende Beständigkeit gegen chemische Angriffe in vielfältiger Weise.

Besondere Eignung haben auch oxid-keramische Werkstoffe, z.B. Aluminiumoxid mit hoher Festigkeit und Härte, Temperaturstabilität, hoher Verschleißbeständigkeit und Korrosionsbeständigkeit auch bei hohen Temperaturen. Hierzu gehört etwa Zirkoniumoxid mit seiner hohen Bruchzähigkeit, hoher Biegebruch- und Zugfestigkeit, hoher Verschleißbeständigkeit, Korrosionsbeständigkeit und niedrigerer Wärmeleitfähigkeit.

Auch Mischungen keramischer Werkstoffe sind geeignet. Dies gilt insbesondere für Mischungen aus den erwähnten Gruppen keramischer Werkstoffe.

Mischungen insbesondere aus Aluminiumoxid und Zirkoniumoxid, insbesondere in der Ausgestaltung als zirkoniumoxid-verstärktes Aluminiumoxid, sind gut geeignet. Ein ebenso geeigneter keramischer Werkstoff ist Aluminium-Titanat, eine Mischung aus Aluminiumoxid und Titanoxid; es weist eine niedrige Wärmeleitfähigkeit auf.

Die vorstehende Auswahl ist nur eine beispielhafte Aufzählung und nicht abschließend, sodass der Fachmann auch an andere keramische Werkstoffe, insbesondere deren Mischungen, denken wird. Hierzu gehören allgemein hochleistungskeramische oder funktionskeramische Werkstoffe.

Der Fachmann wird bei der Auswahl geeigneter keramischer Werkstoffe berücksichtigen, dass manche von ihnen eine höhere Wärmeleitfähigkeit haben als andere. Zu den keramischen Werkstoffen mit einer etwas höheren Wärmeleitfähigkeit gehören etwa Keramiken aus Magnesiumoxid oder Siliciumcarbid oder Aluminiumnitrid, die der Fachmann in Betracht ziehen wird.

Bei der bevorzugten Ausgestaltung der Hitzebeständigkeit sowie der geringeren Wärmeleitfähigkeit weist der Ventilkörper selbst den keramischen Werkstoff oder die Mischung keramischer Werkstoffe auf oder besteht aus diesem oder diesen.

Der Ventilkörper kann dabei vollständig aus einem keramischen Material bestehen. Möglich ist aber auch, dass der Ventilkörper aus einem Kern mit einem anderen Werkstoff besteht, der mit einem keramischen Material in gewünschter Dicke überzogen ist.

An seinem in Richtung Hebel angeordneten Endbereich, d.h. an seinem gegenüber dem vorerwähnten Kopfbereich gegenüber liegenden Bereich, kann der Ventilkörper vorzugsweise kleiner, z.B. schmaler, dünner, ausgestaltet sein als in seinem übrigen Teil.

Dieser Endbereich ist vorzugsweise als Verbindungsanschluss ausgestaltet. Verbindungsanschluss bedeutet hierbei eine Ausgestaltung, an die sich ein anderes Bauteil, wie der Hebel, anschließt. Der Endbereich des Ventilkörpers bzw. der Verbindungsanschluss dient der Verbindung des Ventilkörpers mit einem anderen Bauteil, insbesondere mit dem Hebel. Insbesondere der Verbindungsanschluss kann aus dem keramischen Werkstoff bestehen oder einen solchen aufweisen. Ebenso wie zu dem Ventilkörper ausgeführt, kann auch der Verbindungsanschluss einen Kern mit einem anderen Werkstoff aufweisen, der mit einem keramischen Material in gewünschter Dicke überzogen ist.

Bei dieser vorbeschriebenen Ausgestaltung der Hitzebeständigkeit sowie der geringeren Wärmeleitfähigkeit des Ventilkörpers selbst bzw. des Verbindungsanschlusses des Ventilkörpers übernimmt der Ventilkörper selbst bzw. der Verbindungsanschluss des Ventilkörpers die Funktion eines Keramikkörpers.

Trotz des unmittelbaren Kontakts zwischen dem Ventilkörper, insbesondere dem Verbindungsanschluss des Ventilkörpers, und dem hieran anschließenden Bauteil, insbesondere dem Hebel, findet nur eine eingeschränkte Wärmeleitung von dem Ventilkörper bzw. von dem Verbindungsanschluss des Ventilkörpers auf das anschließende Bauteil, insbesondere den Hebel, infolge des keramischen Werkstoffs des Ventilkörpers bzw. des Verbindungsanschlusses statt. Das anschließende Bauteil, insbesondere der Hebel, erhitzt auch bei längerem Betrieb nicht übermäßig; entsprechend wird eine dauerhafte und exakte Einhaltung der durch die Querschubdüsen initiierten Änderungen der Lagesteuerung bzw. Bahnsteuerung des Flugkörpers in besonders vorteilhafter Weise gewährleistet; das Ventil mit seinem Ventilkörper und Hebel sowie die weiteren in einem Ventil aufgenommenen Bauteilen bleiben funktionstüchtig.

Der schlecht leitende keramische Werkstoff besitzt auch bei höheren Temperaturen noch eine hohe Festigkeit und kann somit über den Ventilkörper und den Hebel die Ansteuerkräfte übertragen, ohne dass sich die weiterhin in einer Querschubdüse vorhandene Ansteuereinheit zu sehr erhitzt.

Die vorstehenden Ausführungen zur stofflichen Ausgestaltung des Ventilkörpers gelten bei einer bevorzugten Ausführungsform der Erfindung auch für den Hebel, der mithin in stoffliche Hinsicht in gleicher Weise konfiguriert sein kann. Zur Vermeidung von diesbezüglichen Wiederholungen wird auf die vorstehenden entsprechenden Ausführungen zur stofflichen Ausgestaltung des Ventilkörpers Bezug genommen.

In einer anderen bevorzugten Ausführungsform weist wenigstens ein Bereich der Oberfläche des Hebels eine Isolationsschicht auf, die den Hebel vor übermäßig starke Erwärmung schützt, damit die Festigkeit des Hebels durch Wärmeeinwirkung nicht stark abfällt. Insoweit gelten die vorstehenden Ausführungen zu der stofflichen Ausgestaltung des Ventilkörpers mit einem hitzebeständigen Material gleichermaßen für die stoffliche Ausgestaltung der Isolationsschicht des Hebels. Die Isolationsschicht kann sich selbst verständlich auch über den gesamten Umfang des Hebels erstrecken.

In einer weiteren bevorzugten Ausführungsform sind der Ventilkörper und der Hebel als eine untrennbare Einheit ausgebildet. Sie können in diesem Fall insbesondere materialeinheitlich und/oder in einem ausgestaltet sein, um das System zu vereinfachen und um Anwendungsprobleme zwischen Ventilkörper und Hebel noch weiter zu verringern. In diesem Fall weisen der Ventilkörper sowie der Hebel als Einheit dieselben stofflichen Eigenschaften in Bezug auf die Hitzebeständigkeit und Wärmeleitfähigkeit auf, wie sie vorstehend ausführlich für das Bauteil des Ventilkörpers dargelegt worden sind. Auch insoweit wird zur Vermeidung von Wiederholungen hierauf Bezug genommen.

Bei der Herstellung eines in Bezug auf die Hitzebeständigkeit und Wärmeleitfähigkeit optimierten Ventilkörpers und Hebels entsprechend den vorstehenden Erläuterungen sind die üblichen Herstellungsschritte und Maßnahmen zu beachten, wie sie bei der Produktion von technischer Keramik angewandt werden. Pulver, Formgebung und Sinterprozess bestimmen wesentlich das Ergebnis, weil sie das Mikrogefüge des erzielten Stoffes zentral beeinflussen. Eingeengte Maßtoleranzen der Bauteile werden durch Hartbearbeitung der gesinterten Keramik verwirklicht.

### Beschreibung von Ausführungsbeispielen:

Die Erfindung wird weiter anhand der nachfolgenden Ausführungsbeispiele, auf die sie freilich nicht beschränkt ist, näher beschrieben. Hierbei zeigen:
- Fig. 1:: einen schematischen Schnitt einer Düsenanordnung mit Ventil in einem Querschubtriebwerk;
- Fig. 2:: ein Querschubtriebwerk im schematischen Schnitt senkrecht zur Flugkörperachse;
- Fig. 3:: einen schematischen Schnitt durch ein Querschubtriebwerk mit einer Düse;

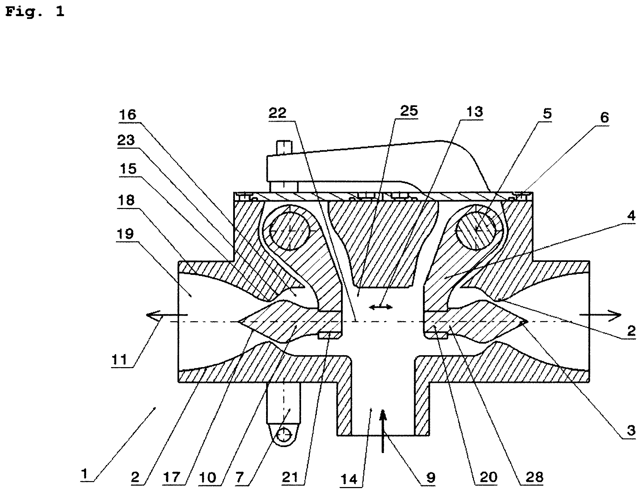

Fig. 1 zeigt ein regelbares Querschubtriebwerk 1, das eine regelbare Querschubdüse 2 aufweist. Die regelbare Querschubdüse 2 einhält eine Anordnung eines Ventils 10. Das Ventil 10 weist einen Ventilkörper 3 auf.

Der Ventilkörper 3 ist im Inneren des durch die Wandung 18 der Querschubdüse 2 gebildeten Gehäuses der Querschubdüse 2 angeordnet.

Das Ventil 10 dient der Steuerung des jeweiligen Gasstroms. Der Gasstrom ist durch die Pfeile 9 und 11 kenntlich gemacht. Die Querschubdüse 2 nimmt dabei die mit der Bezugsziffer 9 gekennzeichnete Gasströmung auf, die aus der Brennkammer (nicht dargestellt) über den Gaszuführkanal 14 in die Querschubdüse eingeleitet wird. Die Gasströmung wird dabei in den Aufnahmeraum 25 der Querschubdüse 2 geleitet, der auch das Ventil 10 aufnimmt.

Die Gasströmung umströmt dabei den Ventilkörper 3 des Ventils 10 und wird dabei in Richtung Düsenhals 15 der Düse 2 weitergeleitet. Durch den Kanal 16 erfolgt dabei der Übergang des Gasstroms von dem Aufnahmeraum 25 in den glockenförmig erweiterten Innenraum 19 der Querschubdüse. Die Gasströmung wird ausweislich der Bezugsziffer 11 im weiteren Verlauf aus dem Innenraum 19 der Querschubdüse abgeleitet.

Wie in Fig. 1 weiter gezeigt, ist die Anordnung des Ventilkörpers 3 beweglich ausgestaltet. Dies wird mittels des Doppelpfeils 13 zum Ausdruck gebracht. Danach kann der Ventilkörper 3 in beide Richtungen 13 entlang seiner Längsachse 22 bewegt werden.

Durch diese bewegliche Ausgestaltung des Ventilkörpers 3 können die Durchflussmenge und die Strömungsgeschwindigkeit der Verbrennungsgase, die den Ventilköper 3 umströmen, gesteuert werden. Wird der Ventilkörper 3 in Richtung der Ableitung der Gasströmung 11 aus der Querschubdüse 2 bewegt, so nähert sich der Ventilkörper 3 mit seinem kegelförmigen Komplementärabschnitt 17, d.h. mit seinem Kopfabschnitt, dem konvexen Verlauf der Innenwandung 23 der Wandung 18 der Querschubdüse im Bereich deren Düsenhalses 15. Hierdurch ändert sich der Querschnitt des Kanals 16 für die Durchleitung der Verbrennungsgase. Der Kanal 16 ist um den Komplementärabschnitt 17 des Ventilkörpers 3 umlaufend ausgestaltet, mithin zwischen dem Komplementärabschnitt 17 des Ventilkörpers 3 und dem konvexen Verlauf der Innenwandung 23 der Wandung 18 der Querschubdüse 2 im Bereich deren Düsenhalses 15 angeordnet.

Fig. 1 zeigt die Offenstellung des Kanals 16 im Bereich des Düsenhalses 15. Durch eine (nicht dargestellte) Bewegung des Ventilkörpers 13 des Ventils 10 nach links kann eine GeschlossenStellung des Kanals 16 bewirkt werden. Durch diese Bewegung des Ventilkörpers 3 in beide Richtungen kann mithin eine Querschnittsänderung des Kanals 16 von einer vollständigen Schließung des Düsenhalses 15 durch den kegelförmigen Komplementärabschnitt 17 bis zu einer vollständigen Öffnung des Düsenhalses 15 bewirkt werden. Je nach Offen- oder GeschlossenStellung des Kanals 16 ändert sich die Umströmung des Ventilkörpers 13 mittels der Verbrennungsgase in diesem Bereich.

Fig. 1 zeigt den Ventilkörper 3 des Ventils 10 als sog. Pintle-Konfiguration, bei der die Pintle bzw. der Zapfen mittels des Komplementärabschnittes 17 den Düsenhals 15 schließen oder öffnen kann, je nach Bewegungsrichtung des Ventilkörpers 3 des Ventils 10.

Die vorerwähnte bewegliche Ausgestaltung des Ventilkörpers 3 entlang seiner Längsachse 22 wird durch seine Verbindung mit dem Bauteil des Hebels 4 ermöglicht.

Wie auch in Fig. 1 gezeigt, ist der Ventilkörper mit dem Hebel 4 verbunden. Die mit der Bezugsziffer 13 zum Ausdruck gebrachte Bewegung des Ventilkörpers 3 in seiner Längsachse 22 wird durch den In der in Fig. 1 gezeigten Ausführungsform geht der Ventilkörper 3 des Ventils 10 in seinem dem Komplementärabschnitt 17 gegenüberliegenden in Richtung Verbindungsbereich 27 des Hebels 4 liegenden Endbereich 28 absatzförmig in einen Verbindungsanschluss 20 über. Der Verbindungsanschluss 20 ist schmaler bzw. dünner, also mit einem geringeren Durchmesser, ausgestaltet als der Hauptteil des Ventilkörpers 3. Der Endbereich 28 des Ventilkörpers 3 bzw. der Verbindungsanschluss 20 dient der Verbindung des Ventilkörpers 3 mit dem Hebel 4. Der Hebel 4 umgreift mit seinem einen, dem Ventilkörper 3 zugewandten Ende den Verbindungsanschluss 20. Die Verbindung ist formschlüssig ausgestaltet.

Hebel 4 und seine seinerseits bewegliche Ausgestaltung bewerkstelligt.

Der Hebel 4 hat eine längliche geometrische Form. Er ist in dem Aufnahmeraum 25 des Gehäuses 24 der Düsenanordnung angeordnet.

Er erstreckt sich in einem etwa rechten Winkel von dem Ende des Ventilkörpers 3 in den Aufnahmeraum 25 der Düsenanordnung hinein.

Die Verbindung zwischen dem Ventilkörper 3 und dem Hebel 4 ist dabei räumlich in der Nähe des Eintritts des von der Brennkammer (nicht gezeigt) kommenden Gaszuführkanals 14 angeordnet.

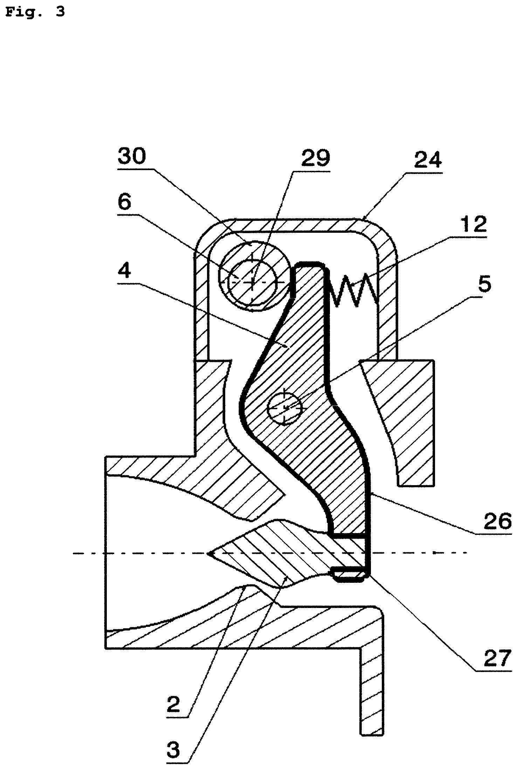

Die Geometrien des Endbereichs des Ventilkörpers 3 und des Verbindungsbereiches 27 des Hebels 4 sind auf einander abgestimmt, was sich deutlich aus Fig. 3 ergibt, wobei jeweils auch inverse Geometrien möglich sind.

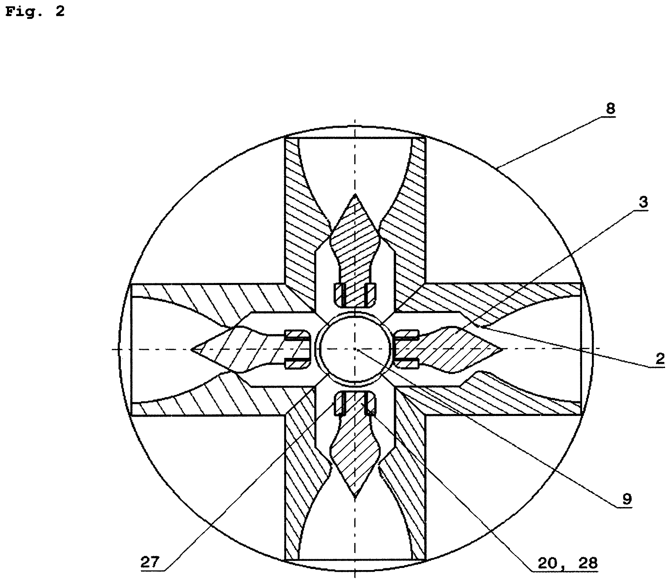

Der Endbereich 28 bzw. Verbindungsanschluss 20 des Ventilkörpers wird in der in Fig. 2 gezeigten Ausführungsform teilweise von dem Verbindungsbereich 27 des Hebels 4 umgriffen.

Insoweit kommen alle geeigneten Verbindungstechniken in Betracht unter Beachtung üblicher Maßnahmen für die Einhaltung von Passungen, Toleranzen, Festigkeiten und dergleichen.

Beabstandet von dem Verbindungsbereich 27 des Hebels 4 ist dessen Drehachse 5 angeordnet, Fig. 1, 3.

Somit ist der Ventilkörper 3 mit dem um die Drehachse 5 drehbaren Hebel 4 formschlüssig verbunden.

Der Hebel 4 ist über eine drehbare Welle 6 mit einem Stellantrieb 7 verbunden, Fig. 1. Er kann über diesen Stellantrieb 7 durch Drehen der Welle 6 um die Drehachse 5 bewegt werden. Der Stellantrieb 7 kann die Welle 6 elektrisch oder hydraulisch um die Drehachse 5 drehen. In dieser Ausführungsform gem. Fig. 1 fällt die Drehachse 5 des Hebels 4 räumlich-geometrisch mit der Welle 6 zusammen. Die Funktion der Drehachse 5 des Hebels 4 und die Funktion der (Antriebs-)Welle 6 des Hebels 4 werden also räumlich nicht getrennt umgesetzt.

Die Welle 6 ist an dem gegenüberliegenden Ende des Verbindungsbereichs 27 des Hebels 4 mit dem Hebel 4 verbunden. Dieser, die Welle 6 aufnehmende Bereich des Hebels 4 ist in einem Bereich des Gehäuses 24 der Düsenanordnung untergebracht, der von dem Bereich der Verbindung des Endes des Ventilkörpers 3 mit dem Verbindungsbereich 27 des Hebels 4 räumlich entfernt ist, nämlich in dem in Fig. 1, 3 gezeigten Ausführungsbeispiel, diesem gegenüberliegt.

Anders als in Fig. 1 weist die Welle 6 in dem in Fig. 3 gezeigten Ausführungsbeispiel eine von der Drehachse 5 zu unterscheidende Achse 29 auf, die in einem gewissen Abstand zur Drehachse 5 des Hebels angeordnet ist. In dieser Ausführungsform gem. Fig. 3 fällt die Drehachse 5 des Hebels 4 konstruktiv und räumlich-geometrisch - anders als bei Fig. 1 - nicht mit der Welle 6 bzw. deren Achse zusammen. Die Funktion von Drehachse 5 des Hebels 4 und die Funktion der(Antriebs-) Welle 6 des Hebels 4 werden also räumlich getrennt umgesetzt.

In der Ausführungsform gem. Fig. 3 ist an dem oberen Ende des Hebels 4 eine Nocke 30 auf der Welle 6 angeordnet, die im Betrieb des Stellantriebs 7 (nicht in Fig. 3 gezeigt), der die Drehung der Welle 6 bewirkt, zur Bewegung des Hebels 4 entsprechend der Nockenform führt. Die Nocke 30 ist bevorzugt exzentrisch geformt. Der Hebel 4 ist dabei bevorzugt kraftschlüssig mit der Nocke verbunden.

Die Welle 6 wie auch der Hebel 4 sind in dem die Düsenanordnung aufnehmenden Gehäuse 24 untergebracht.

In dem Ausführungsbeispiel gem. Fig. 3 stützt sich eine ebenfalls in diesem Gehäuse an der gegenüberliegenden Seite der Welle 6 angeordnete Feder 12 an der Außenseite des Hebels 4 sowie an der Innen-Wandung des Gehäuses der Düsenanordnung ab. Die Federkraft ist den oberen Teil des Hebels 4 gerichtet, der seinerseits durch die Nockendrehung von der Achse 29 der Welle 6 wegbewegt wird. Sie führt zur Reduzierung der durch die Betätigung des Stellantriebs einhergehenden Bewegung der Welle 6 um die Drehachse 5 des Hebels 4 und damit zur Entlastung des Stellantriebs. Diese Feder ist so angeordnet, dass die Kraft, die auf die Feder wirkt, entgegengesetzt der Kraft ist, die durch den Gasdruck über den Ventilkörper 3 auf den Hebel 4 lastet, wodurch die Kraft und die Leistung des Stellantriebs 7 (nicht gezeigt) verringert werden.

Die Drehung der Welle 6 führt zu einer entsprechenden lateralen Bewegung des die Welle 6 aufnehmenden Teils des Hebels 4, was zu einer entsprechenden Drehbewegung des Hebels 4 um seine Drehachse 5 führt. Da der Ventilkörper 3, wie dargelegt, im Verbindungsbereich 27 des Hebels 4 mit diesem verbunden ist, führt die Drehung des Hebels 4 um seine Drehachse 5 zu einer entsprechenden Bewegung des Ventilkörpers 3 entlang seiner Längsachse 22.

Durch die Bewegung des Ventilkörpers 3 wird wiederum die Düsenöffnung verkleinert oder vergrößert, um den Schub zu verändern.

Durch diese vorbeschriebene Ausgestaltung können in einer Ebene mehrere gegenüberliegende Düsen auf kleinstem Raum angeordnet werden und durch eine zentrale Zuströmung 9 mit Gas versorgt werden, Fig. 2, wobei in bevorzugter Weise jeder Ventilkörper einzelnen angesteuert werden kann. Fig. 2 zeigt weiter die Außenbegrenzung 8 der Düsenanordnung des Querschubtriebwerks. Zu erkennen ist, dass in diesem Beispiel zwei Düsenquerschnitte durch den jeweiligen Ventilkörper 3 verschlossen sind, während die beiden anderen mehr bzw. weniger geöffnet dargestellt sind. Das Querschubtriebwerk nimmt mithin einen möglichst geringen Durchmesser und Bauraum ein, die Gasströmung umströmt den Ventilkörper konzentrisch und der Strömungsvektor der Gasströmung wird nicht oder allenfalls gering abgelenkt.

In der in Fig. 3 gezeigten Ausführungsform die Oberfläche des Hebels 4 eine Isolationsschicht 26 auf, die den Hebel vor übermäßig starke Erwärmung schützt, damit die Festigkeit des Hebels durch Wärmeeinwirkung nicht stark abfällt.

Es gelten für die gezeigten Ausführungsformen die oben erfolgten Ausführungen zu der stofflichen Ausgestaltung des Ventilkörpers mit einem hitzebeständigen und nur gering wärmeleitendem Material sowie gleichermaßen für die stoffliche Ausgestaltung der Isolationsschicht des Hebels.

### Bezugszeichenliste

- 1: Querschubtriebwerk
- 2: Querschubdüse
- 3: Ventilkörper
- 4: Hebel
- 5: Drehachse
- 6: Welle
- 7: Stellantrieb
- 8: Außenbegrenzung
- 9: Gasströmung (aus Brennkammer eingeleitet in Querschubdüse)
- 10: Ventil
- 11: Gasströmung (Ableitung aus Querschubdüse)
- 12: Feder
- 13: Bewegungsrichtung des beweglichen Ventilkörpers
- 14: Gaszuführkanal (von Brennkammer kommend)
- 15: Düsenhals
- 16: Kanal(für die Durchleitung der Verbrennungsgase)
- 17: Komplementärabschnitt des Ventilkörpers zu Düsenhals
- 18: Wandung der Querschubdüse
- 19: Innenraum der Querschubdüse
- 20: Verbindungsanschluss
- 21: Aufnahmeteil Hebel
- 22: Längsachse
- 23: konvexer Verlauf der Wandung
- 24: Gehäuse
- 25: Aufnahmeraum
- 26: Isolationsschicht
- 27: Verbindungsbereich Hebel
- 28: Endbereich Ventilkörper
- 29: Achse Welle
- 30: Nocke

## Patentansprüche

1. Ventil (10) einer Düse (2) für ein regelbares Querschubtriebwerk (1) für Flugkörper, mit
einem beweglichen Ventilkörper (3),
einem Hebel (4),
**dadurch gekennzeichnet, dass**
der Hebel (4) um eine Drehachse (5) drehbar ausgestaltet ist und, dass
der Ventilkörper (3) mit dem Hebel (4) formschlüssig verbunden ist und, dass
der Ventilkörper (3) an seinem Kopfabschnitt (17) kegelförmig ausgebildet ist.

2. Ventil (10) nach Anspruch 1 **dadurch gekennzeichnet, dass**
der Ventilkörper (3) wenigstens teilweise als Rotationskörper ausgestaltet ist.

3. Ventil (10) nach Anspruch 1 oder 2 **dadurch gekennzeichnet, dass**
der Hebel (4) über eine drehbare Welle (6) mit einem Stellantrieb (7) verbunden ist.

4. Ventil (10) nach einem oder mehreren der vorstehenden Ansprüche 1 - 3 **dadurch gekennzeichnet, dass**
der Ventilkörper (3) entlang seiner Längsachse (22) beweglich ausgestaltet ist durch Drehung des Hebels (4) um seine Drehachse (5).

5. Ventil (10) nach einem oder mehreren der vorstehenden Ansprüche 1 - 4 **dadurch gekennzeichnet, dass**
der Hebel (4) mit einer auf der drehbaren Welle (6) angeordneten exzentrischen Nocke (30)kraftschlüssig verbunden ist.

6. Ventil (10) nach einem oder mehreren der vorstehenden Ansprüche 1 - 5 **dadurch gekennzeichnet, dass**
wenigstens eine Feder (12) mit dem Hebel (4) kraftschlüssig verbunden ist.

7. Ventil (10) nach einem oder mehreren der vorstehenden Ansprüche 1 - 6 **dadurch gekennzeichnet, dass**
der Ventilkörper (3) einen keramischen Werkstoff aufweist.

8. Ventil (10) nach einem oder mehreren der vorstehenden Ansprüche 1 - 7 **dadurch gekennzeichnet, dass**
dass der Ventilkörper (3) einen Verbindungsanschluss (20) aufweist.

9. Ventil (10) nach einem oder mehreren der vorstehenden Ansprüche 1 - 8 **dadurch gekennzeichnet, dass**
der Verbindungsanschluss (20) des Ventilkörpers (3) einen keramischen Werkstoff aufweist.

10. Ventil (10) nach einem oder mehreren der vorstehenden Ansprüche 1 - 9 **dadurch gekennzeichnet, dass**
der Hebel (4) einen keramischen Werkstoff aufweist.

11. Ventil (10) nach einem oder mehreren der vorstehenden Ansprüche 7, 9 oder 10 **dadurch gekennzeichnet, dass**
der keramische Werkstoff ein oxidkeramischer Werkstoff ist.

12. Ventil (10) nach einem oder mehreren der vorstehenden Ansprüche 1 - 11 **dadurch gekennzeichnet, dass**
der Ventilkörper (3) und der Hebel (4) als untrennbare Einheit ausgestaltet sind.

13. Querschubtriebwerk für Flugkörper mit einer Düse (2), mit einem Ventil (10) mit einem beweglichen Ventilkörper (3) und mit einem Hebel (4) **dadurch gekennzeichnet, dass** das Ventil (10) ausgestaltet ist nach einem oder mehreren der Ansprüche 1 - 12.

14. Flugkörper mit wenigstens einem Querschubtriebwerk (1) **dadurch gekennzeichnet, dass** das Querschubtriebwerk (1) ausgestaltet ist nach Anspruch 13.

## Claims

1. A valve (10) of a nozzle (2) for an adjustable thrust engine (1) for a missile, comprising
a moveable valve body (3),
a lever (4),
**characterized in that**
the lever (4) is designed to be rotatable around a rotational axis (5), and that
the valve body (3) is positively connected to the lever (4), and that
the valve body (3) is cone-shaped at its head portion (17).

2. The valve (10) according to Claim 1, **characterized in that** the valve body (3) is at least partially designed as a rotational body.

3. The valve (10) according to Claim 1 or 2, **characterized in that** the lever (4) is connected to an actuator (7) via a rotatable shaft (6).

4. The valve (10) according to one or more of the preceding Claims 1-3, **characterized in that**
the valve body (3) is designed to be moveable along its longitudinal axis (22) by rotating the lever (4) around its rotational axis (5).

5. The valve (10) according to one or more of the preceding Claims 1-4, **characterized in that**
the lever (4) is non-positively connected to an eccentric cam (30) disposed on the rotatable shaft (6).

6. The valve (10) according to one or more of the preceding Claims 1-5, **characterized in that**
at least one spring (12) is non-positively connected to the lever (4).

7. The valve (10) according to one or more of the preceding Claims 1-6, **characterized in that**
the valve body (3) comprises a ceramic material.

8. The valve (10) according to one or more of the preceding Claims 1-7, **characterized in that**
the valve body (3) has a connection port (20).

9. The valve (10) according to one or more of the preceding Claims 1-8, **characterized in that**
the connection port (20) of the valve body (3) comprises a ceramic material.

10. The valve (10) according to one or more of the preceding Claims 1-9, **characterized in that**
the lever (4) comprises a ceramic material.

11. The valve (10) according to one or more of the preceding Claims 7, 9, or 10, **characterized in that**
the ceramic material is an oxide-ceramic material.

12. The valve (10) according to one or more of the preceding Claims 1-11, **characterized in that**
the valve body (3) and the lever (4) are designed as an inseparable device.

13. A thrust engine for a missile comprising a nozzle (2), including a valve (10) comprising a moveable valve body (3) and a lever (4), **characterized in that** the valve (10) is designed according to one or more of the Claims 1-12.

14. A missile comprising at least one thrust engine (1), **characterized in that** the thrust engine (1) is designed according to Claim 13.

## Revendications

1. Vanne (10) d'une buse (2) pour un moteur à poussée transversale réglable (1) pour missiles, avec
un corps de vanne mobile (3),
un levier (4),
**caractérisée en ce que**
le levier (4) est conçu pour pouvoir tourner autour d'un axe rotatif (5) et que
le corps de vanne (3) est relié au levier (4) par complémentarité de formes et que
la partie de tête (17) du corps de vanne (3) a une forme conique.

2. Vanne (10) selon la revendication 1, **caractérisée en ce que** le corps de vanne (3) est conçu au moins en partie comme corps rotatif.

3. Vanne (10) selon la revendication 1 ou 2, **caractérisée en ce que** le levier (4) est relié avec un actionneur (7) via un arbre rotatif (6).

4. Vanne (10) selon l'une ou plusieurs des revendications précédentes 1 ― 3, **caractérisée en ce que**
le corps de vanne (3) est conçu de façon mobile le long de son axe longitudinal (22) par la rotation du levier (4) autour de son axe rotatif (5).

5. Vanne (10) selon l'une ou plusieurs des revendications précédentes 1 ― 4, **caractérisée en ce que**
le levier (4) est relié à une came excentrique (30) disposée sur l'arbre rotatif (6) par complémentarité de forces.

6. Vanne (10) selon l'une ou plusieurs des revendications précédentes 1 ― 5, **caractérisée en ce**
**qu'**au moins un ressort (12) est relié au levier (4) par complémentarité de forces.

7. Vanne (10) selon l'une ou plusieurs des revendications précédentes 1 ― 6, **caractérisée en ce que**
le corps de vanne (3) comprend un matériau céramique.

8. Vanne (10) selon l'une ou plusieurs des revendications précédentes 1 ― 7, **caractérisée en ce que**
le corps de vanne (3) comprend un conduit de raccordement (20).

9. Vanne (10) selon l'une ou plusieurs des revendications précédentes 1 ― 8, **caractérisée en ce que**
le conduit de raccordement (20) du corps de vanne (3) comprend un matériau céramique.

10. Vanne (10) selon l'une ou plusieurs des revendications précédentes 1 ― 9, **caractérisée en ce que**
le levier (4) comprend un matériau céramique.

11. Vanne (10) selon l'une ou plusieurs des revendications précédentes 7, 9 ou 10, **caractérisée en ce que**
le matériau céramique est un matériau en céramique oxydée.

12. Vanne (10) selon l'une ou plusieurs des revendications précédentes 1 ― 11, **caractérisée en ce que**
le corps de vanne (3) et le levier (4) sont conçus comme formant un ensemble indissociable.

13. Moteur à poussée transversale pour missiles avec une buse (2), avec une vanne (10) avec un corps de vanne mobile (3) et avec un levier (4), **caractérisé en ce que** la vanne (10) est conçue selon l'une ou plusieurs des revendications 1 ― 12.

14. Missile avec au moins un moteur à poussée transversale (1), **caractérisé en ce que** le moteur à poussée transversale (1) est conçu selon la revendication 13.
